# EUROPEAN PATENT APPLICATION

(11) **EP 4 668 774 A1**
(43) Date of publication of application: **24.12.2025**
(21) Application number: 25183680.5
(22) Date of filing: 18.06.2025
(51) Int. Cl.: H04R 1/02, H04R 1/08, H04R 25/00

(54) **EAR-WEARABLE ELECTRONIC DEVICE INCLUDING FILTER**

(30) Priority: 18.06.2024 US 202463661127 P; 11.06.2025 US 202519234491
(71) Applicant: Starkey Laboratories, Inc., Eden Prairie, MN 55344 (US)
(72) Inventor: WILBURN, Tim, Eden Prairie, 55344 (US); BURNS, Thomas, Eden Prairie, 55344 (US)
(74) Representative: Crowell & Moring U.K. LLP

(57) **Abstract**

Various embodiments of a superamphiphobic filter and an ear-wearable electronic device including such filter are disclosed. The filter includes a microparticle layer formed from microparticles. The microparticle layer includes a first major surface, a second major surface, and microstructures disposed in the layer that extend from the first major surface. The filter further includes at least one acoustic passageway disposed through the layer between the first and second major surfaces, and nanoparticles disposed on the first major surface of the layer and one or more of the microstructures.

## Description

### CROSS REFERENCE TO RELATED APPLICATION

This application claims the benefit of U.S. Provisional Application No. 63/661,127, filed June 18, 2024, the disclosure of which is incorporated by reference herein in its entirety.

### BACKGROUND

Ear-wearable electronic devices such as hearing devices are disposed in an ear of a wearer or inserted into an opening of an ear canal of the wearer and typically include a housing or shell with electronic components such as a receiver (i.e., speaker) disposed within the housing. The receiver is adapted to provide acoustic information in the form of acoustic waves to the wearer's ear canal from a controller either disposed within the housing of the hearing device or connected to the hearing device by a wired or wireless connection. This acoustic information can include music or speech from a recording or other source. For ear-wearable electronic devices such as hearing devices (e.g., hearing assistance devices), the acoustic information provided to the wearer can include ambient sounds such as speech from a person or persons that are speaking in proximity to the wearer. Such speech can be amplified so that the wearer can better hear the speaker.

Hearing assistance devices, such as hearing aids, can be used to assist wearers suffering hearing loss by amplifying sounds into one or both ear canals. Such devices typically include hearing assistance components such as a microphone for receiving ambient sound, an amplifier for amplifying the microphone signal in a manner that depends upon the frequency and amplitude of the microphone signal, a speaker or receiver for converting the amplified microphone signal to sound for the wearer, and a battery for powering the components.

### SUMMARY

In general, the present disclosure provides various embodiments of a superamphiphobic filter and an ear-wearable electronic device that includes one or more such filters. The filter can include a microparticle layer that includes microstructures such as whole or truncated prisms or pyramids extending from a first major surface of the layer. The filter can also include nanoparticles disposed on the first major surface of the layer and one or more of the microstructures, and one or more acoustic passageways disposed through the layer. In one or more embodiments, the filter can exhibit a contact angle of at least 150 degrees for both liquids and oils. One or more embodiments of filter can be manufactured utilizing a template or support that includes one or more microstructures disposed therein. Such microstructures of the support can form the microstructures that are disposed in the microparticle layer of the filter. In one or more embodiments, the filter can remain disposed on the support to provide a filter assembly that can be utilized with any suitable ear-wearable electronic device.

In one aspect, the present disclosure provides a superamphiphobic filter including a microparticle layer formed from microparticles. The microparticle layer includes a first major surface, a second major surface, and microstructures disposed in the layer that extend from the first major surface. The filter further includes at least one acoustic passageway disposed through the layer between the first and second major surfaces, and nanoparticles disposed on the first major surface of the layer and one or more of the microstructures.

In another aspect, the present disclosure provides a filter assembly including a support having a first major surface, a second major surface, and support microstructures extending from the first major surface to define a structured surface, and a superamphiphobic filter disposed on the structured surface of the support. The filter includes a microparticle layer formed from microparticles. The microparticle layer includes a first major surface, a second major surface, and microstructures disposed in the layer that extend from the first major surface, where the microstructures are formed by the support microstructures of the structured surface of the support. The filter further includes at least one acoustic passageway disposed through the layer between the first and second major surfaces, and nanoparticles disposed on the first major surface of the layer and one or more of the microstructures.

In another aspect, the present disclosure provides an ear-wearable electronic device including a housing, an acoustic port disposed in an outer surface of the housing, and a transducer disposed at least partially within the housing. The device further includes a conduit acoustically connecting the acoustic port and the transducer, where the conduit includes an inner surface; and a superamphiphobic filter disposed over the acoustic port or at least partially within the conduit adjacent the acoustic port. The superamphiphobic filter includes a microparticle layer formed from microparticles. The microparticle layer includes a first major surface, a second major surface, and microstructures disposed in the layer that extend from the first major surface. The filter further includes at least one acoustic passageway disposed through the layer between the first and second major surfaces, and nanoparticles disposed on the first major surface of the layer and one or more of the microstructures.

In another aspect, the present disclosure provides a method of forming a superamphiphobic filter including disposing microparticles on a structured surface of a support to form a structured microparticle layer having a first major surface, a second major surface, and microstructures extending from the first major surface of the layer; disposing nanoparticles on at least a portion of the microparticles; and curing at least one of the microparticles and nanoparticles such that at least a portion of the nanoparticles are bonded to the microparticles. The method further includes disposing at least one acoustic passageway through the microparticle layer between the first major surface and the second major surface, and removing the structured microparticle layer from the support.

All headings provided herein are for the convenience of the reader and should not be used to limit the meaning of any text that follows the heading, unless so specified.

The terms "comprises" and variations thereof do not have a limiting meaning where these terms appear in the description and claims. Such terms will be understood to imply the inclusion of a stated step or element or group of steps or elements but not the exclusion of any other step or element or group of steps or elements. The term "consisting of" means "including," and is limited to whatever follows the phrase "consisting of." Thus, the phrase "consisting of" indicates that the listed elements are required or mandatory and that no other elements may be present. The term "consisting essentially of" means including any elements listed after the phrase and is limited to other elements that do not interfere with or contribute to the activity or action specified in the disclosure for the listed elements. Thus, the phrase "consisting essentially of" indicates that the listed elements are required or mandatory, but that other elements are optional and may or may not be present depending upon whether or not they materially affect the activity or action of the listed elements.

The words "preferred" and "preferably" refer to embodiments of the disclosure that may afford certain benefits, under certain circumstances; however, other embodiments may also be preferred, under the same or other circumstances. Furthermore, the recitation of one or more preferred embodiments does not imply that other embodiments are not useful and is not intended to exclude other embodiments from the scope of the disclosure.

In this application, terms such as "a," "an," and "the" are not intended to refer to only a singular entity but include the general class of which a specific example may be used for illustration. The terms "a," "an," and "the" are used interchangeably with the term "at least one." The phrases "at least one of" and "comprises at least one of" followed by a list refers to any one of the items in the list and any combination of two or more items in the list.

As used herein, the term "or" is generally employed in its usual sense including "and/or" unless the content clearly dictates otherwise.

The term "and/or" means one or all of the listed elements or a combination of any two or more of the listed elements.

As used herein in connection with a measured quantity, the term "about" refers to that variation in the measured quantity as would be expected by the skilled artisan making the measurement and exercising a level of care commensurate with the objective of the measurement and the precision of the measuring equipment used. Herein, "up to" a number (e.g., up to 50) includes the number (e.g., 50).

Also herein, the recitations of numerical ranges by endpoints include all numbers subsumed within that range as well as the endpoints (e.g., 1 to 5 includes 1, 1.5, 2, 2.75, 3, 3.80, 4, 5, etc.).

These and other aspects of the present disclosure will be apparent from the detailed description below. In no event, however, should the above summaries be construed as limitations on the claimed subject matter, which subject matter is defined solely by the attached claims, as may be amended during prosecution.

### BRIEF DESCRIPTION OF THE DRAWINGS

Throughout the specification, reference is made to the appended drawings, where like reference numerals designate like elements, and wherein:
FIG. 1 is a schematic diagram of one embodiment of an ear-wearable electronic device that includes a superamphiphobic filter.
FIG. 2 is a schematic perspective view of the superamphiphobic filter of FIG. 1 disposed on a support to provide a superamphiphobic filter assembly.
FIG. 3 is a schematic cross-section view of a portion of the superamphiphobic filter assembly of FIG. 2.
FIG. 4 is a schematic perspective view of a support that can be utilized with the superamphiphobic filter assembly of FIG. 2.
FIG. 5 is a schematic plan view of the support of FIG. 4.
FIG. 6 is a schematic cross-section view of a portion of the support of FIG. 2.
FIG. 7 is a schematic perspective view of a portion of another embodiment of a support that can be utilized with the superamphiphobic filter assembly of FIG. 2.
FIG. 8 is a schematic perspective view of a portion of another embodiment of a support that can be utilized with the superamphiphobic filter assembly of FIG. 2.
FIG. 9 is a schematic perspective view of a portion of another embodiment of a support that can be utilized with the superamphiphobic filter assembly of FIG. 2.
FIG. 10 is a schematic perspective view of one embodiment of a support that can be utilized with the superamphiphobic filter assembly of FIG. 2.
FIG. 11 is a flowchart of one embodiment of a technique for manufacturing the superamphiphobic filter assembly of FIG. 2.
FIG. 12 is a schematic perspective view of another embodiment of an ear-wearable electronic device that can include a superamphiphobic filter assembly.
FIG. 13 is a schematic cross-section view of a portion of the ear-wearable electronic device of FIG. 12.
FIG. 14 is a schematic cross-section view of an earpiece of the ear-wearable electronic device of FIG. 12.
FIG. 15 is a schematic cross-section view of another embodiment of an ear-wearable electronic device that can include a superamphiphobic filter assembly.
FIG. 16 is a schematic diagram of another embodiment of an ear-wearable electronic device that can include a superamphiphobic filter assembly.
FIG. 17 is a schematic perspective view of another embodiment of a support that can be utilized with the superamphiphobic filter assembly of FIG. 2.
FIG. 18 is a schematic perspective view of another embodiment of a support that can be utilized with the superamphiphobic filter assembly of FIG. 2.
FIG. 19 is a schematic perspective view of another embodiment of a support that can be utilized with the superamphiphobic filter assembly of FIG. 2.
FIG. 20 is a schematic perspective view of another embodiment of a support that can be utilized with the superamphiphobic filter assembly of FIG. 2.
FIG. 21 is a schematic perspective view of another embodiment of a support that can be utilized with the superamphiphobic filter assembly of FIG. 2.

### DETAILED DESCRIPTION

In general, the present disclosure provides various embodiments of a superamphiphobic filter and an ear-wearable electronic device that includes one or more such filters. The filter can include a microparticle layer that includes microstructures such as whole or truncated prisms or pyramids extending from a first major surface of the layer. The filter can also include nanoparticles disposed on the first major surface of the layer and one or more of the microstructures, and one or more acoustic passageways disposed through the layer. In one or more embodiments, the filter can exhibit a contact angle of at least 150 degrees for both liquids and oils. One or more embodiments of the filter can be manufactured utilizing a template or support that includes one or more microstructures disposed therein. Such microstructures of the support can form the microstructures that are disposed in the microparticle layer of the filter. In one or more embodiments, the filter can remain disposed on the support to provide a filter assembly that can be utilized with any suitable ear-wearable electronic device.

An acoustic path (i.e., microphone port, conduit, etc.) of a transducer such as a microphone or receiver of an ear-wearable electronic device can suffer from foreign material ingress, which can eventually degrade performance of the transducer and in turn the device. For example, an acoustic path or conduit of a receiver of the device can be at least partially occluded by foreign material or debris, thereby attenuating sound waves that are directed from the receiver through the acoustic port to an ear of a wearer. As a result of these occlusions, such device needs to be cleaned, which often requires expensive shipping and professional service.

One or more embodiments of a superamphiphobic filter and ear-wearable electronic device including such filter that are described herein can exhibit one or more advantages over currently-available filters and devices. For example, one or more embodiments of a superamphiphobic filter can reduce or prevent ingress of liquids and oils into acoustic pathways or conduits of a device that may potentially occlude such conduits. In one or more embodiments, the superamphiphobic filter can exhibit a contact angle of at least 150 degrees for both liquids and oils, thereby providing a filter that is both hydrophobic and oleophobic. By increasing surface energy of the filter, such filter would require fewer cleanings to maintain its acoustic properties.

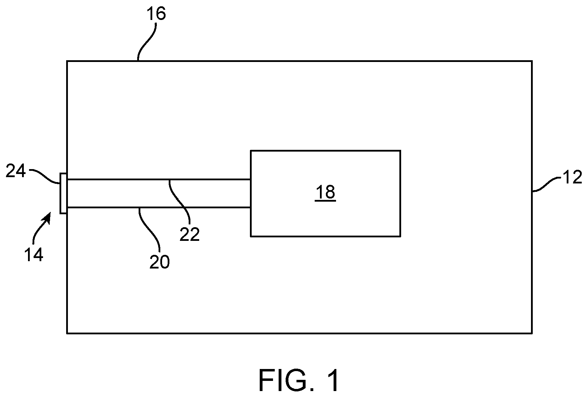

FIG. 1 is a schematic diagram of one embodiment of an ear-wearable electronic device 10. The device 10 includes a housing 12, an acoustic port 14 disposed in an outer surface 16 of the housing, and a transducer 18 disposed at least partially within the housing. The device 10 also includes an acoustic pathway or conduit 20 that acoustically couples the acoustic port 14 and the transducer 18. As used herein, the term "acoustically coupled" means fluidically coupled or that any barrier positioned between two or more elements or components that are acoustically coupled is generally acoustically transparent for frequencies of interest, where acoustically transparent means that the element or component attenuates sound at a sound pressure level of no greater than 6 dB or has an acoustical impedance of less than 500 MKS Rayls. The conduit 20 includes an inner surface 22. The device 10 also includes at least one superamphiphobic filter 24 disposed over the acoustic port 14 or at least partially within the conduit 20 adjacent the acoustic port.

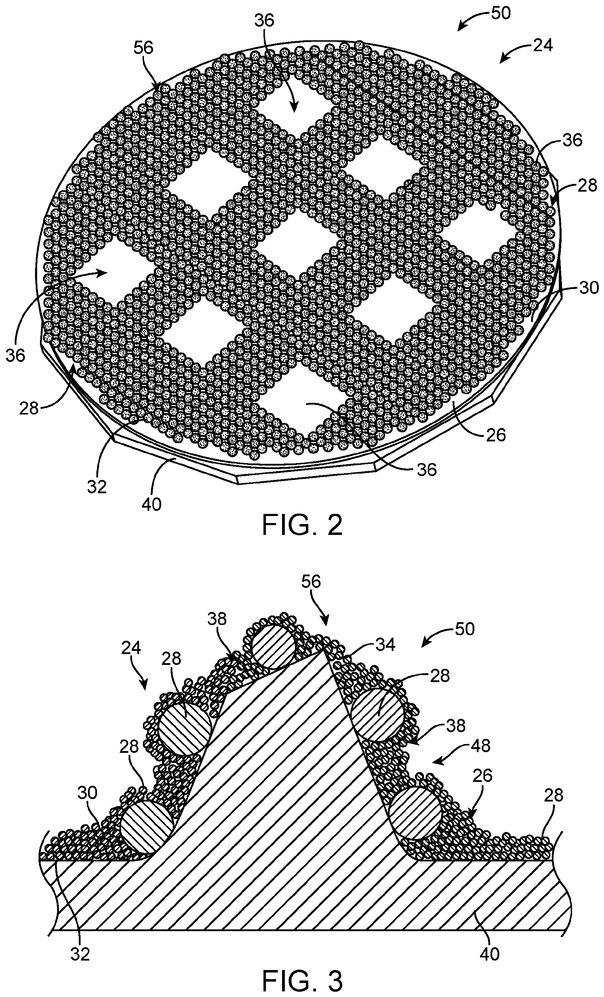

FIGS. 2-3 are schematic perspective and partial cross-section views of the filter 24 disposed on a support 40 to provide a superamphiphobic filter assembly 50. Such filter 24 includes a microparticle layer 26 formed from microparticles 28. The microparticle layer 26 has a first major surface 30, a second major surface 32, and microstructures 34 disposed in the layer that extend from the first major surface. The filter 24 further includes at least one acoustic passageway 36 disposed through the layer 26 between the first and second major surfaces 30, 32, and nanoparticles 38 (FIG. 3) disposed on the first major surface of the layer and one or more of the microstructures 34. The nanoparticles 38 are not shown in FIG. 2 for clarity.

In general, the superamphiphobic filter 24 can be any suitable filter that is configured to prevent or reduce the passage of at least one of liquids or oils from entering the acoustic path or conduit 20 from exterior to the housing 12 of the ear-wearable device 10. As used herein, the term "superamphiphobic" means that the filter exhibits both superhydrophobic and superoleophobic properties. In one or more embodiments, such superamphiphobic filter can exhibit a static contact angle of at least 150 degrees along with either low or high movement (hysteresis) for both liquids and oils.

The filter 24 can be disposed on any suitable portion or portions of the housing 12 of the device 10 such that it is disposed over the acoustic port 14 or at least partially within the conduit 20. Although depicted as including one filter 24, the device 10 can include any suitable number of filters disposed in any suitable locations relative to the housing 12. As is further described herein, the device 10 can include any suitable number of conduits 20 that acoustically connect one or more transducers 18 to the external environment. In one or more embodiments, one or more filters 24 can be disposed over an acoustic port 14 of each conduit 20 of the device 10 or at least partially within the conduit.

Further, the filter 24 can exhibit any suitable porosity. As used herein, the term "porosity" means a dimensionless volume ratio that is determined by dividing a volume of pores or openings through the filter 24 by the overall volume of the filter. In one or more embodiments, the filter 24 can have a porosity of at least 10% and no greater than 98%. In portions of the filter 24 that overlay the conduits 20, the porosity of the filter can be at least 10% and no greater than 40%. In portions of the filter 24 that do not overlayer the conduits 20, the porosity of the filter can be at least 40% and no greater than 98%.

The microparticle layer 26 can include any suitable material and have any suitable dimensions. The layer 26 is formed from microparticles 28 that can include any suitable material, e.g., at least one of an organic or inorganic material. In one or more embodiments, the microparticles 28 can include a polymeric material suspended in a solvent for use in electro-nano spraying, electro-micro spinning, or vapor deposition. In one or more embodiments, the microparticles 28 include a polymeric material, e.g., at least one of polyacrylate, polytetrafluoroethylene (PTFE), polyvinyl chloride (PVC), or cellulose. Further, the microparticles 28 can have any suitable dimensions. For example, the microparticles 28 can include any suitable mean diameter. **In** one or more embodiments, the microparticles 28 can have a mean diameter of at least 5 µm and no greater than 50 µm as measured over the entirety of the layer 26. Further, each microparticle 28 can have any suitable length. The microparticles 28 can take any suitable shape, e.g., spheres, rods, fibers, etc. In one or more embodiments, the microparticles 28 can include microfibers that can form a microfiber web having any suitable fiber orientation, e.g., random, oriented, webbed, etc.

**In** one or more embodiments, the microparticles 28 of the microparticle layer 26 can be disposed on the support 40 as a monolayer. **In** one or more embodiments, the microparticles 28 can be disposed in multiple layers in one or more portions of the layer 26. The microparticle layer 26 can have any suitable density of microparticles 28.

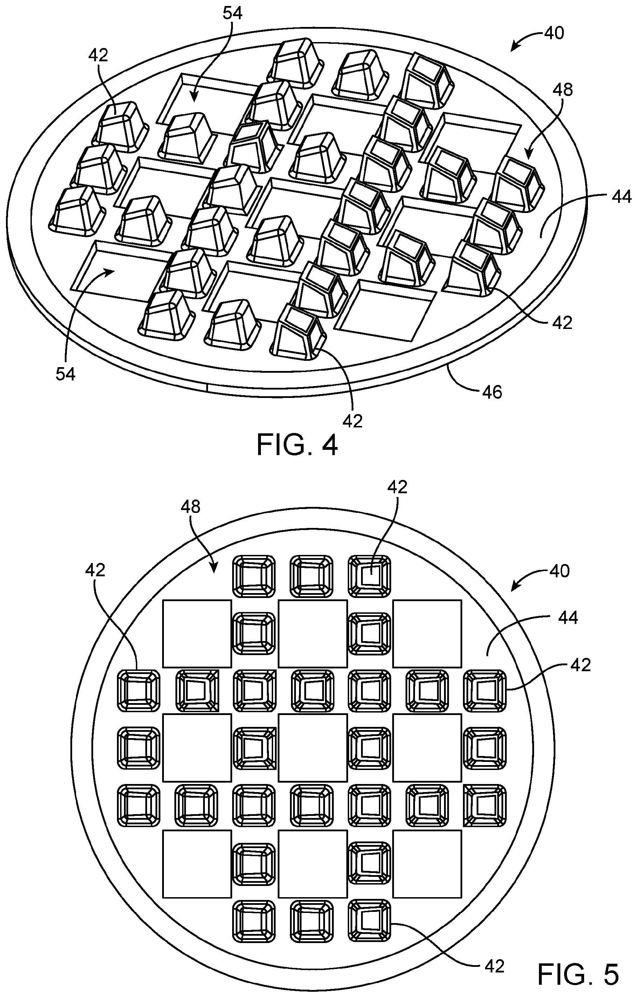

The microparticle layer 26 can be manufactured using any suitable technique. **In** one or more embodiments, the microparticle layer 26 can be manufactured by depositing microparticles 28 onto the support 40 (FIGS. 4-5) that includes one or more support microstructures 42 that form the microstructures 34 of the layer. The support 40 further includes a first major surface 44 and a second major surface 46, where the microstructures 42 extend from the first major surface to define a structured surface 48. The microstructures 42 of the support 40 can be formed using any suitable technique, e.g., molding, injection molding, electroforming, chemically etching, 3D printing, laser etching, laser milling, etc. The microparticles 28 can be disposed on the structured surface 48 of the support 40 using any suitable technique, e.g., electrospinning. Once deposited onto the support 40, the microparticles 28 can be bonded together using any suitable technique to form the layer 26. In one or more embodiments, one or more of the microparticles 28 can be bonded to the support 40 and not to adjacent microparticles. In one or more embodiments, the microparticles 28 can be bonded together and to the support 40.

The support 40 can define one or more openings or openings 54 that are disposed therethrough between the first major surface 44 and the second major surface 46. Any suitable number of openings 54 can be disposed through the support 40. Further, the openings 54 can take any suitable shape, e.g., rectangular, ovular, triangular, polygonal, etc. Each opening 54 can have any suitable area. The openings 54 can be utilized to form the at least one acoustic passageway 36 of the filter 24 as is further described herein.

In one or more embodiments, a filter assembly 50 can be provided by the filter 24 and the support 40 as shown in FIGS. 2-3. In such embodiments, the filter 24 can be disposed on the structured surface 48 of the support 40 during or after the filter has been formed. In one or more embodiments, the support 40 can provide a substrate or support for the filter, where the substrate can be utilized for handling during manufacture of the ear-wearable electronic device 10. Further, the filter 24 can remain disposed on the support 40 after the filter has been disposed on or at least partially within the device 10. In other words, the support 40 can remain connected to the filter 24 and act as the support for handling and/or installation of the filter on or at least partially within the device 10.

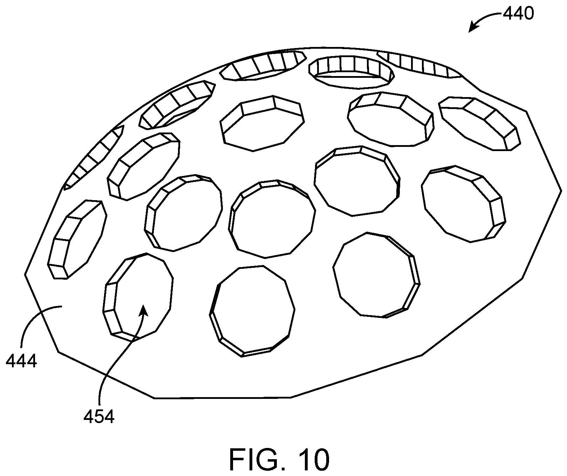

Such support 40 can take any suitable shape and have any suitable dimensions. For example, FIG. 10 is a schematic perspective view of one embodiment of a support 440 upon which the filter 24 can be manufactured or disposed for installation on or at least partially within the ear-wearable electronic device 10. The support 440 can take any suitable shape and have any suitable dimensions. As illustrated in FIG. 10, the support 440 includes a first major surface 444 that can take any suitable shape. Although not shown, the support 440 further includes a second major surface. In the embodiment illustrated in FIG. 10, the first major surface 444 is curved or domed. Further, one or more openings 454 are defined by the support 440. Such openings 454 are configured to allow acoustic waves that propagate through the filter 24 to pass through the support 440 and into the acoustic port 14 and/or conduit 20. In one or more embodiments, the openings 454 are configured to allow acoustic waves to propagate through the support 440 and then through the filter 24. The support 440 can include any suitable material. The filter 24 can be disposed on the first major surface 444 or on an inner surface of the support. Further, the filter 24 can be connected to the support 440 using any suitable technique such that it remains in place during and after installation, e.g., bonding, adhering, mechanically fastening, etc. For example, microparticles 28 of the microparticle layer 26 can be partially cured during manufacture and then fully cured onto the support 440 using any suitable technique such that the filter is bonded to the substrate. Although not shown, the support 440 can include one or more microstructures (e.g., microstructures 42 of support 40 of FIGS. 3-4) disposed randomly or in any suitable pattern or arrangement, e.g., in an orthogonal or radial arrangement.

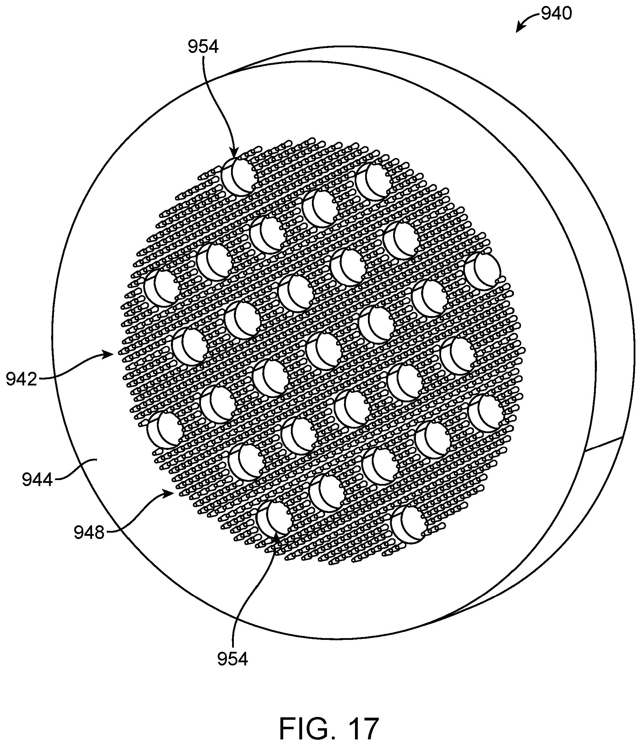

Further, for example, FIG. 17 is a schematic perspective view of another embodiment of a support 940 upon which the filter 24 can be manufactured or disposed for installation on or at least partially within the ear-wearable electronic device 10. All design considerations and possibilities described herein regarding support 440 of FIG. 10 apply equally to support 940 of FIG. 17 to the extent that they do not conflict. The support 940 can take any suitable shape and have any suitable dimensions. As illustrated in FIG. 17, the support 940 includes a first major surface 944 that can take any suitable shape. Although not shown, the support 940 also includes a second major surface. Further, one or more openings 954 are defined by the support 940. Such openings 954 are configured to allow acoustic waves that propagate through the filter 24 to pass through the support 940 and into the acoustic port 14 and/or conduit 20. In one or more embodiments, the acoustic waves can first pass through the openings 954 and then through the filter 24. The support 940 also includes microstructures 942 disposed on the first major surface 944 that at least in part define a structured surface 948 of the support. The microstructures 942 can include any suitable microstructures described herein, e.g., microstructures 42 of support 40 of FIGS. 4-5. The microstructures 942 can be randomly disposed on the first major surface 944 or in any suitable pattern or arrangement. In one or more embodiments, the microstructures 942 can be disposed in an orthogonal or radial arrangement.

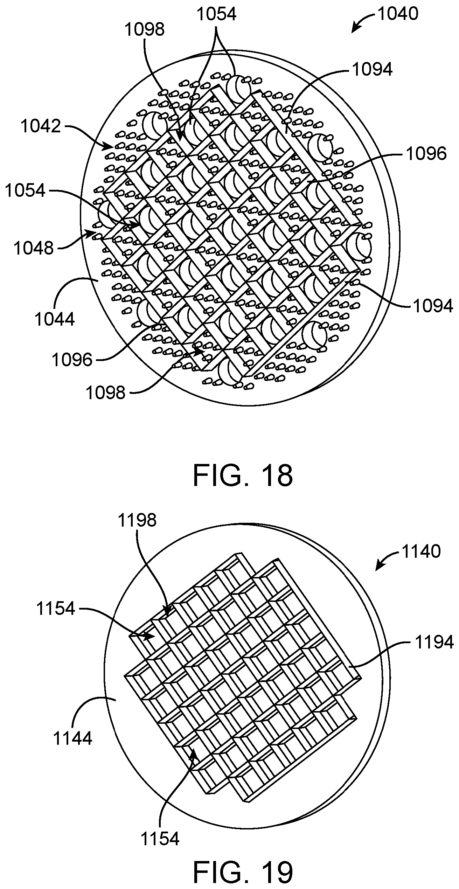

Further, for example, FIG. 18 is a schematic perspective view of another embodiment of a support 1040 upon which the filter 24 can be manufactured or disposed for installation on or at least partially within the ear-wearable electronic device 10. All design considerations and possibilities described herein regarding support 440 of FIG. 10 and support 940 of FIG. 17 apply equally to support 1040 of FIG. 18 to the extent that they do not conflict. The support 1040 can take any suitable shape and have any suitable dimensions. As illustrated in FIG. 18, the support 1040 includes a first major surface 1044 that can take any suitable shape. Although not shown, the support 1040 further includes a second major surface. Further, one or more windows or openings 1054 are defined by the support 1040. Such openings 1054 are configured to allow acoustic waves that propagate through the filter 24 to pass through the support 1040 and into the acoustic port 14 and/or conduit 20. In one or more embodiments, the acoustic waves can first pass through the openings 1054 and then through the filter 24. The support 1040 also includes support microstructures 1042 disposed on the first major surface 1044 that can at least in part define a structured surface 1048 of the support. The support microstructures 1042 can include any suitable microstructures described herein, e.g., support microstructures 42 of support 40 of FIGS. 4-5. The support microstructures 1042 can be randomly disposed on the first major surface 1044 or in any suitable pattern or arrangement. In one or more embodiments, the support microstructures 1042 can be disposed in an orthogonal or radial arrangement.

One difference between the support 1040 of FIG. 18 and the support 940 of FIG. 17 is that the support microstructures 1042 include a grid 1094 extending from the first major surface 1044 of the support. The grid 1094 includes a plurality of wall sections 1096 that can be connected using any suitable technique to define the grid. Each wall section 1096 can take any suitable shape and have any suitable dimensions. In one or more embodiments, at least one wall section 1096 can include a cross-section in a plane substantially orthogonal to the first major surface 1044 of the support 1040 that decreases in a direction away from the first major surface to form a peak or sharp edge of the wall portion.

Further, the grid 1094 can take any suitable shape and have any suitable dimensions. In one or more embodiments, the grid 1094 can define one or more cells 1098, where each cell can take any suitable shape in a plane substantially parallel to the first major surface 1044 of the support 1040, and have any suitable dimensions. For example, in one or more embodiments, at least one cell 1098 can take a rectangular shape in the plane parallel to the first major surface 1044. In one or more embodiments, at least one cell 1098 can take a triangular shape, an ovular shape, or any polygonal shape in such plane. Each of the cells 1098 can take the same shape. In one or more embodiments, at least one cell 1098 can take a shape that is different from one or more additional cells.

Further, each cell 1098 can have any suitable area as measured in the plane parallel to the first major surface 1044 of the support 1040. In one or more embodiments, at least one cell 1098 can have an area of at least 2500 square microns and no greater than 0.26 square millimeters. Further, in one or more embodiments, at least one cell 1098 can have a cell to wall ratio (i.e., open area) of at least 10% and no greater than 90%.

The grid 1094 can be disposed in any suitable portion or portions of the first major surface 1044 of the support. In one or more embodiments, at least one opening 1054 can be disposed within a cell 1098. In one or more embodiments, each opening 1054 can be disposed within a cell 1098. As shown in FIG. 18, one or more openings 1054 are disposed adjacent the grid 1094 but not within a cell 1098. Further, in one or more embodiments, at least one opening 1054 can be disposed in two or more cells 1098. In one or more embodiments, two or more openings 1054 can be disposed within a single cell 1098.

The grid 1094 can be disposed on the support 1040 using any suitable technique. In one or more embodiments, support microstructures 1042 can first be disposed on the support 1040 using any suitable technique, e.g., cast and cure. One or more wall sections 1096 of the grid 1094 can then be formed from one or more support microstructures 1042 using any suitable technique, e.g., by directing electromagnetic energy at the support microstructures to reform them as one or more wall sections 1096 of the grid. In one or more embodiments, any suitable laser can be utilized to form one or more wall sections 1096 of the grid 1094 from one or more support microstructures 1042.

Although not shown in FIG. 18, any suitable filter described herein can be disposed on the structured surface 1048 of the support 1040 using any suitable technique. For example, the superamphiphobic filter 24 of FIGS. 1-3 can be disposed on the structured surface 1048 of the support 1040. The support microstructures 1042 of the structured surface 1048 of the support 1040 can form one or more microstructures 34 of the filter 24. In such embodiments, microstructures 34 of the filter 24 can include a grid extending from the first major surface 30 of the microparticle layer 26 that is formed or defined by the grid 1094 of the support 1040. Such grid formed in the filter 24 can also include a plurality of cells having any suitable shape in a plane substantially parallel to the first major surface 30 of the filter. Further, at least one acoustic passageway 36 of the filter 24 can be disposed within a cell the plurality of cells of the grid that is formed in the filter. In one or more embodiments, each acoustic passageway 36 is disposed in a cell of the plurality of cells of this grid of the filter 24.

In one or more embodiments, the filter 24 disposed on the support 1040 can include the microparticle layer 26 formed from microparticles. The filter 24 can also include nanoparticles 38 disposed on the first major surface 30 of the microparticle layer 26 and one or more of the microstructures 34. In one or more embodiments, the filter 24 can include the microparticle layer 26 but no nanoparticles. The microparticles 28 can be disposed on one or more portions of the grid pattern of the microstructures 34 that are formed by the grid 1094 of the support 1040. Further, in one or more embodiments, nanoparticles 38 can be disposed on one or more portions of the microstructures 34 that are formed by the grid 1094 of the support 1040.

While not wishing to be bound by any particular theory, liquid droplets may be retained by top edges of microstructures 34 of the filter 24 defined by the grid 1094 of the support 1040 and prevented from passing through acoustic passageways 36 of the filter. Further, air trapped within cells 1098 of the support 1040 or cells defined in the filter 24 by the support may also prevent liquid droplets from entering acoustic passageways 36 defined by the openings 1054 disposed within the cells. As a result, edges of the grid 1094 can keep liquid droplets elevated above the openings 1154.

As mentioned herein, a support and a filter formed from such support can exhibit any suitable relationship between an area of an opening (or area of an acoustic passageway of the resulting filter) disposed within a cell of a grid of a microstructured layer of the support (or cell of the resulting filter) and an area of the cell. For example, FIG. 19 is a schematic perspective view of another embodiment of a support 1140 upon which the filter 24 can be manufactured or disposed for installation on or at least partially within the ear-wearable electronic device 10. All design considerations and possibilities described herein regarding support 440 of FIG. 10, support 940 of FIG. 17, and support 1040 of FIG. 18 apply equally to support 1140 of FIG. 19 to the extent that they do not conflict.

One difference between support 1140 and support 1040 is that one or more openings 1154 of the support can have an area in a plane substantially parallel to a first major surface 1144 of the support that is substantially equal to an area of a cell 1198 (in the same plane) of grid 1194 within which the opening is disposed. In one or more embodiments, a shape of the opening 1154 in the plane is the same shape and has the same dimensions as its respective cell 1198. Although each is depicted as having a rectangular shape, the openings 1154 and the cells 1198 can each take any suitable shape.

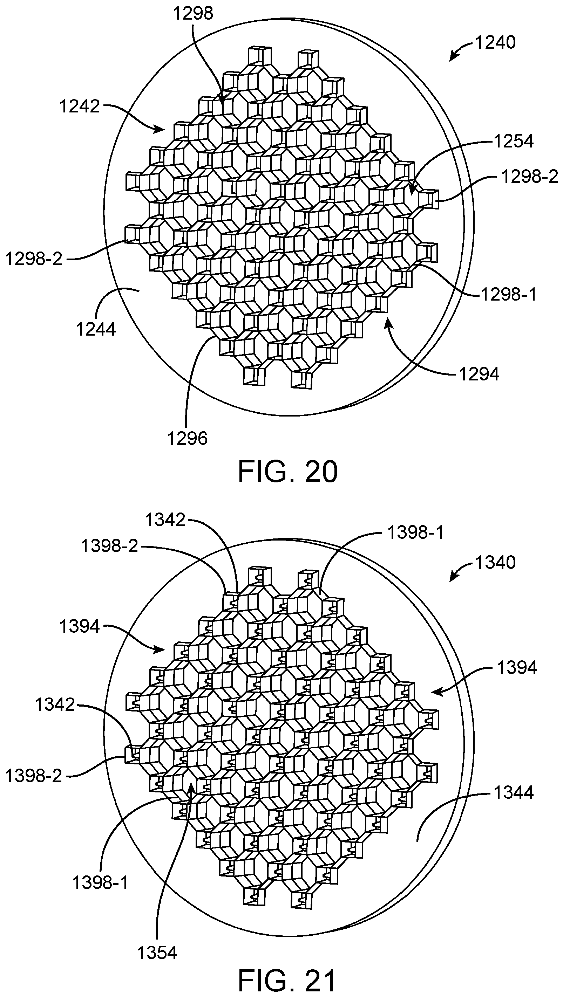

As mentioned herein, one or more cells of a grid pattern of a microstructure layer of a filter or support can include a passageway or opening disposed therein. In one or more embodiments, one or more cells of the grid can have no passageways or openings disposed therein. For example, FIG. 20 is a schematic perspective view of another embodiment of a support 1240 upon which the filter 24 can be manufactured or disposed for installation on or at least partially within the ear-wearable electronic device 10. All design considerations and possibilities described herein regarding support 440 of FIG. 10, support 940 of FIG. 17, support 1040 of FIG. 18, and support 1140 of FIG. 19 apply equally to support 1240 of FIG. 20 to the extent that they do not conflict.

As shown in FIG. 20, the support 1240 includes a first major surface 1244 and support microstructures 1242 in the form of a grid 1294 extending from the first major surface. The grid 1294 includes a plurality of wall sections 1296 that can be connected using any suitable technique to define the grid. The grid 1294 defines cells 1298 including first cells 1298-1 that each take a polygonal shape and second cells 1298-2 that each take a rectangular shape in a plane substantially parallel to the first major surface 1244 of the support 1240. Each of the first cells 1298-1 include an opening 1254 disposed therein. In one or more embodiments, each opening 1254 takes the same shape as the associated first cell 1298-1 and has the same area as the associated cell. In one or more embodiments, at least one first cell 1298-1 does not include an opening disposed within the cell. Further, each second cell 1298-2 does not include an opening disposed therein. In one or more embodiments, at least one second cell 1298-2 includes an opening disposed within the cell.

Although the second cells 1298-2 do not include or circumscribe openings, in one or more embodiments, one or more microstructures can be disposed within one or more of the second cells.

For example, FIG. 21 is a schematic perspective view of another embodiment of a support 1340 upon which the filter 24 can be manufactured or disposed for installation on or at least partially within the ear-wearable electronic device 10. All design considerations and possibilities described herein regarding support 440 of FIG. 10, support 940 of FIG. 17, support 1040 of FIG. 18, support 1140 of FIG. 19, and support 1240 of FIG. 20 apply equally to support 1340 of FIG. 21 to the extent that they do not conflict.

As shown in FIG. 21, the support 1340 includes support microstructures 1342 disposed on a first major surface 1344 of the support. The support microstructures 1342 include a grid 1394 extending from the first major surface 1344 of the support 1340. The grid 1394 includes a plurality of wall sections 1396. In one or more embodiments, the grid 1394 defines a plurality of cells 1398. The cells 1398 can include first cells 1398-1 and second cells 1398-2. Each second cell 1398-2 circumscribes or includes a support microstructure 1342, which can take any suitable shape and have any suitable dimensions. Further, any suitable number of support microstructures 1342 can be disposed within each second cell 1398-2. Although each second cell 1398-2 of FIG. 21 includes a support microstructure 1342, in one or more embodiments, at least one second cell does not include or circumscribe a support microstructure. Further, in one or more embodiments, one or more first cells 1398-1 can include one or more support microstructures 1342 in addition to or in place of an opening 1354.

Returning to FIGS. 2-3, the first and second major surfaces 30, 32 of the microparticle layer 26 can take any suitable shape. In one or more embodiments, each of the first and second major surfaces 30, 32 are planar. In one or more embodiments, one or more portions of at least one of the first or second major surfaces 30, 32 can be curved.

Disposed in the microparticle layer 26 and extending from the first major surface 30 of the layer are one or more microstructures 34. The layer 26 can include any suitable number of microstructures 34 disposed in any suitable arrangement or pattern. In one or more embodiments, one or more of the microstructures 34 can be disposed in a random or pseudorandom array.

Each microstructure 34 can take any suitable shape and have any suitable dimensions. In one or more embodiments, each microstructure 34 can take the same shape and have the same dimensions. In one or more embodiments, one or more structures 34 can take at least one of a shape or have one or more dimensions that are different from one or more additional microstructures. In one or more embodiments, at least one of the microstructures 34 can have a height as measured in a direction substantially orthogonal to a plane of the first major surface 30 of the layer 26 of at least 1 nm and no greater than 750 microns. Further, in one or more embodiments, at least one of the microstructures 34 can have a width or diameter as measured in a plane substantially parallel to the first major surface 30 of the microparticle layer 26 that is at least 1 nm and no greater than 10 microns. In one or more embodiments, at least one of the microstructures 34 can have an aspect ratio (height to width or diameter) of at least 2:3 and no greater than 15:1.

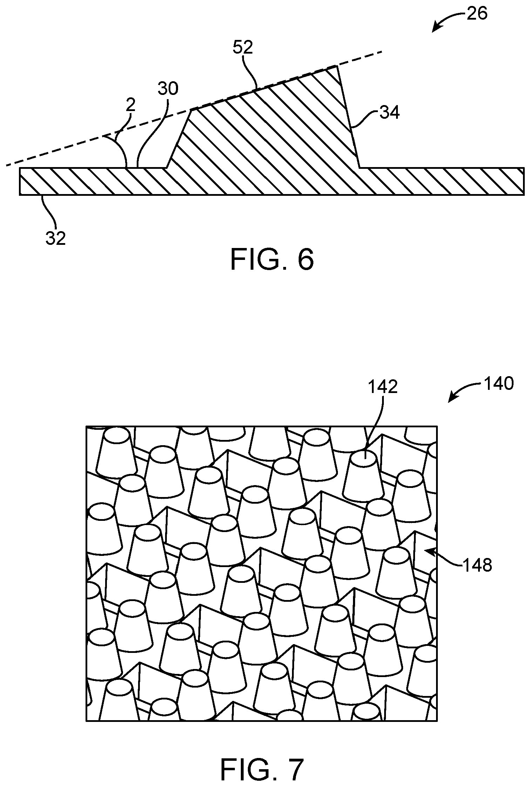

Each of the microstructures 34 can take any suitable shape, e.g., sphere, semi sphere, hemisphere, pyramid, cylinder, prism, cone, etc. Further, at least one of the microstructures 34 can have one or more truncated surfaces. For example, as illustrated in FIG. 6, the at least one microstructure 34 can have a truncated surface 52 that forms an angle 2 with a plane of the first major surface 30 of the microparticle layer 26 that is greater than 0 degrees and no greater than 60 degrees. In one or more embodiments, at least one microstructure 34 can have two or more truncated surfaces that form any suitable angle with the plane of the first maj or surface of 30, e.g., the at least one microstructure can have a faceted shape.

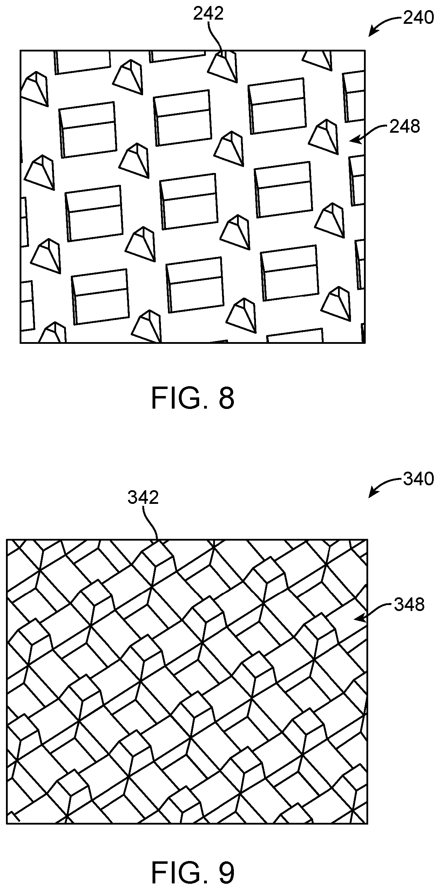

FIGS. 4-5 and 7-9 are schematic views of at least portions of supports that include various shapes of microstructures that can be imparted upon the microparticle layer 26 of filter 24. For example, as shown in FIGS. 4-5, the support 40 includes the structured surface 48 that includes microstructures 42 each taking a truncated prismatic shape. As shown in FIG. 7, support 140 includes a structured surface 148 including microstructures 142 that are truncated cones or frustoconical shapes. In FIG. 8, support 240 has a structured surface 248 that includes microstructures 242 that are truncated pyramids. And support 340 of FIG. 9 includes a structured surface 348 having microstructures 342 that are truncated prisms.

Returning once again to FIGS. 1-5, the filter 24 also includes one or more acoustic passageways 36 disposed through the layer 26 between the first and second major surfaces 30, 32 of the layer. The acoustic passageways 36 are configured to allow propagation of acoustic waves that are incident upon either the first major surface 30 or second major surface 32 of the microparticle layer 26. The filter 24 can have any suitable number of passageways 36. Further, such passageways 36 can be disposed in any suitable arrangement or pattern in any suitable portion or portions of the layer 26.

Each acoustic passageway 36 can take any suitable shape in a plane substantially parallel to the first major surface 30 of the layer 26, e.g., rectangular, ovular, triangular, polygonal, etc. Further, each acoustic passageway 36 can have any suitable dimensions. For example, at least one acoustic passageway 36 can have any suitable area as projected onto a plane that is parallel to the first major surface 30 of the microparticle layer 26, i.e., in the plane of the first major surface. In one or more embodiments, at least one acoustic passageway 36 has an area of at least 0.015 square millimeters and no greater than 0.06 square millimeters. The effective open cross-sectional area of the acoustic passageway can be at least 5% open and at most 95% open. The passageways 36 can be formed using any suitable technique, e.g., cutting, stamping, laser cutting, laser ablation, etc., to remove portions or regions of the microparticle layer 26 that are disposed over or aligned with the openings 54 of the support 40 after the microparticle layer has been disposed onto the support. In embodiments where the microparticle layer 26 includes a microfiber web, portions of the web can remain disposed over one or more of the acoustic passageways 36 to retain at least a portion of debris or liquids that are incident upon the openings.

In general, at least a portion of the acoustic waves that are incident upon the superamphiphobic filter 24 can be transmitted or propagate through the filter in part because of the acoustic passageways 36 that are disposed therethrough. In one or more embodiments, the filter 24 can be acoustically transparent, i.e., the filter has an acoustical impedance of less than 500 MKS Rayls. In one or more embodiments, the filter 24 has an acoustic impedance of less than 100 MKS Rayls.

The superamphiphobic filter 24 can also include nanoparticles 38 disposed on at least one of the first major surface 30 or second major surface 32 of the layer 26 in any suitable portion or region of the layer. In one or more embodiments, nanoparticles 38 can be disposed on one or more of the microstructures 34 of the layer 26. The nanoparticles 38 can include any suitable material, e.g., at least one of an organic material or inorganic material. In one or more embodiments, one or more of the nanoparticles 38 can include at least one of metallic, ceramic, or polymeric material. In one or more embodiments, one or more of the nanoparticles 38 can include at least one of silicon dioxide, chitosan, or chitin. In one or more embodiments, one or more of the nanoparticles 38 can include a magnetic material.

The nanoparticles 38 can take any suitable shape and have any suitable dimensions. As used herein, the term "nanoparticle" means a particle having at least two external dimensions in the nanoscale. In one or more embodiments, the nanoparticles 38 can include particles shapes of at least one of spheres, rods, plates, or cubes. In one or more embodiments, spherical nanoparticles 38 can have a mean particle size of at least 1 nm and no greater than 750 microns across the layer 26. Further, each microparticle 28 can have any suitable length. For polymorph shapes, the nanoparticles 38 can have a distance from a center of mass of the particle to the closest boundary of the particle of at least 1 nm and no greater than 10 microns. In one or more embodiments, the nanoparticles 38 can have a mean particle length (for rod-shaped nanoparticles) of at least 25 nanometers and no greater than 100 nanometers.

In one or more embodiments, the nanoparticles 38 can be disposed on the layer 26 as a monolayer. In one or more embodiments, the nanoparticles 38 can be disposed in multiple layers in one or more portions of the layer 26. A substantial portion of the nanoparticles 38 can be distributed on microparticles 28 of the layer 26. In one or more embodiments, one or more portions of the support 40 can have nanoparticles 38 distributed thereon.

The nanoparticles 38 can be disposed on the first major surface 30 of the microparticle layer 26 and/or on one or more of the microstructures 34 of the layer using any suitable technique. In one or more embodiments, the nanoparticles 38 can be disposed on the layer 26 utilizing at least one of electrospraying or vapor deposition. In one or more embodiments, a dip and dry process can be utilized with chitosan where chitosan can be disposed in water and hydrolyzed. The hydrolyzed chitosan can then be added to PVA and dipped. The drying process can remove the water, thereby forming the modified surface. Further, in one or more embodiments, a non-fluorinated material such as trimethylaluminum and trymethylchitosan can be vapor deposited onto the layer 26.

In one or more embodiments, at least a portion of the nanoparticles 38 are attached to the microparticle layer 26 using any suitable technique. For example, the microparticle layer 26 can be disposed on the structured surface 48 of the support 40 using any suitable technique, and the microparticles 28 of the layer can remain uncured or be partially cured. The nanoparticles 38 can then be disposed on the microparticle layer 26, and the layer can be fully cured using any suitable technique such that at least a substantial portion of the nanoparticles are attached to the layer. In one or more embodiments, the microparticle layer 26 can be fully cured after being disposed on the support 40, and the nanoparticles 38 can be disposed on the fully cured layer while still in an uncured or partially cured state. Following deposition onto the layer 26, the nanoparticles 38 can be cured using any suitable technique.

The combination of the microparticle layer 26, the microstructures 34 formed in the layer, and the nanoparticles 38 disposed on the layer can provide an overall structured surface 56 that can exhibit both hydrophobic and oleophobic characteristics.

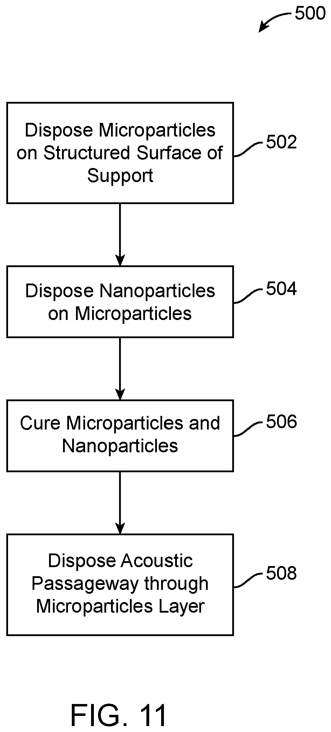

As mentioned herein, the superamphiphobic filter 24 can be manufactured using any suitable technique. For example, FIG. 11 is a flowchart of one technique 500 for manufacturing the filter 24 and filter assembly 50. Although described regarding the filter 24 and the filter assembly 50 of FIGS. 1-5, the technique 500 can be utilized to manufacture any suitable superamphiphobic filter and assembly. At 502, the microparticles 28 can be disposed on the structured surface 48 of the support or substrate 40 to form the structured microparticle layer 26 using any suitable technique, e.g., electrospinning. The nanoparticles 38 can be disposed on at least a portion of the microparticles 28 at 504 using any suitable technique, e.g., electrospraying. At 506, at least one of the microparticles 28 or the nanoparticles 38 can be cured using any suitable technique such that at least a portion of the nanoparticles are bonded or attached to the microparticles. One or more acoustic passageways 36 can be disposed through the microparticle layer 26 at 508 using any suitable technique such that the acoustic passageways extend between the first major surface 30 and the second major surface 32 of the layer. In one or more embodiments, a laser can be utilized to ablate or remove regions or portions of the microparticle layer 26 that are coincident or aligned with the openings 54 of the support 40 to remove such layer and nanoparticles 38 to form the passageways s. At 510, the structured microparticle layer 26 can be removed from the support 40 using any suitable technique. In one or more embodiments, the structured microparticle layer 26 can remain disposed on the support 40 to provide a filter assembly 50 that can be disposed on or at least partially within the ear-wearable electronic device 10. In one or more embodiments, the filter 24 can be removed from the support 40 and disposed on a different support (e.g., support 440 of FIG. 10) and then disposed on or at least partially within the ear-wearable electronic device 10.

Returning to FIG. 1, the device 10 can include any suitable ear-wearable electronic device. In one or more embodiments, the device 10 can be a hearing device such as a hearing assistance device. Any suitable hearing assistance device can be utilized, e.g., behind-the-ear (BTE), in-the-ear (ITE), in-the-canal (ITC), receiver-in-canal (RIC), completely-in-the-canal (CIC), or invisible-in-the-canal (IIC)-type hearing assistance devices. In one or more embodiments, the device 10 is configured to be disposed at least partially within the ear canal of the wearer such as a CIC or IIC device. It is understood that BTE type hearing devices can include devices that reside substantially behind the ear or over the ear. Such devices can include hearing devices with receivers associated with an electronics portion of the device or hearing devices of the type having receivers in the ear canal of the wearer, including but not limited to receiver-in-canal (RIC) or receiver-in-the-ear (RITE) designs. The present subject matter can also be used in hearing assistance devices generally, such as cochlear implant type ear-wearable devices and such as deep insertion devices having a transducer, such as a receiver or microphone, whether custom fitted, standard, open fitted, or occlusive fitted. The present subject matter can additionally be used in consumer electronic wearable audio devices having various functionalities. It is understood that other devices not expressly stated herein can also be used with the present subject matter.

Further, the housing 12 of the device 10 can take any suitable shape and have any suitable dimensions. In one or more embodiments as further described herein, the device 10 can be an earpiece that is a component of a hearing device system. The housing 12 can include any suitable material, e.g., at least one inorganic or organic material.

Disposed at least partially within the housing 12 is the transducer 18. The device can include any suitable number of transducers 18. Further, the transducer 18 can include any suitable transducer. In one or more embodiments, the transducer 18 is a receiver, and the conduit 20 can be configured to allow transmission or propagation of acoustic waves produced by the receiver based on one or more signals from a controller of the system through the acoustic port 14 and into the ear of the wearer. Further, in one or more embodiments, the transducer 18 can be a microphone, and the conduit 20 can be configured to allow propagation of acoustic waves from the wearer's environment external to the housing 12 into the microphone. In one or more embodiments, the device 10 can include both a receiver and a microphone, each acoustically coupled to a conduit that allows propagation of acoustic waves either from or to the external environment of the wearer.

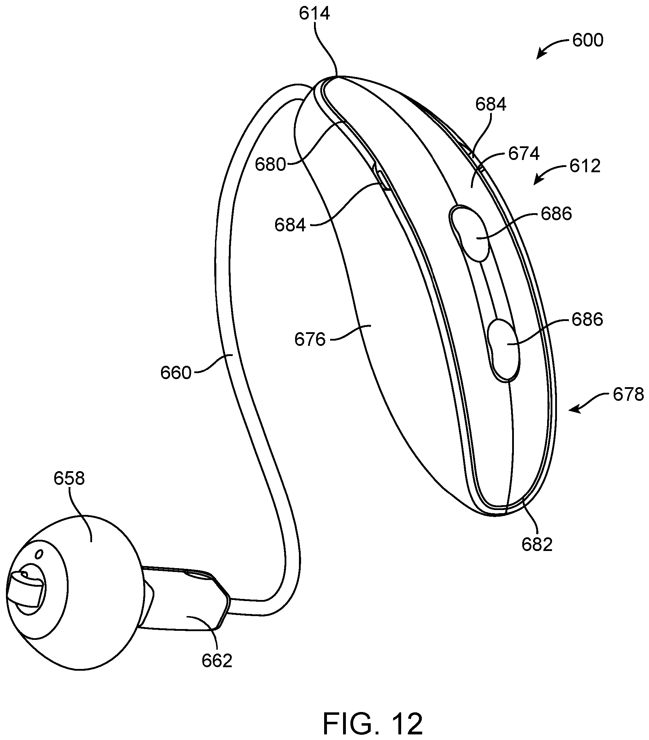

As mentioned herein, the various embodiments of superamphiphobic filters can be utilized with any suitable ear-wearable electronic device. For example, FIGS. 12-14 are various views of another embodiment of an ear-wearable electronic device 600. All design considerations and possibilities described herein regarding ear-wearable electronic device 10 of FIG. 1 apply equally to device 600 of FIGS. 12-14 to the extent that they do not conflict.

The illustrated embodiment of the device 600 is a behind-the-ear (BTE) type device and thus includes a housing 612 that is operable to be wom on or behind an ear of a wearer. The device 600 further includes a conduit 620 disposed in the housing 612 and extending between a microphone port 614 disposed at an outer surface 616 of the housing and an outlet 615 disposed within the housing. The device 600 further includes a microphone 618 (e.g., transducer 18 of FIG. 1) disposed within the housing 612 and acoustically coupled to the outlet 615 of the microphone conduit 620 adjacent a microphone inlet 623 of the microphone 618. Additionally, a filter 624 is disposed in the microphone conduit 620 or at least partially within the microphone conduit.

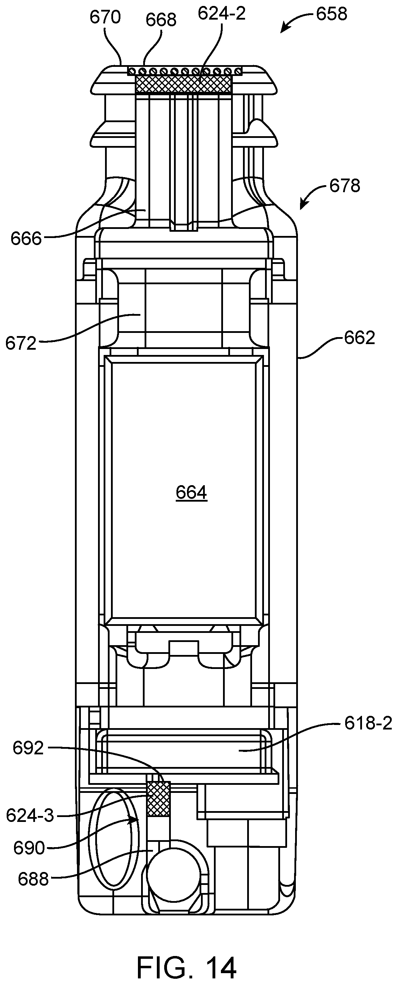

The device 600 can also include an earpiece 658 that is coupled to the housing 612 by a cable 660. The earpiece 658 can include an earpiece housing 662 and a receiver 664 (FIG. 14) (e.g., transducer 18 of FIG. 1) disposed at least partially within the housing. The receiver 664 is configured to direct or transmit acoustic waves into the wearer's ear through an acoustic conduit 666 that extends between an outlet 668 of the conduit disposed at an outer surface 670 of the earpiece housing 662 and an inlet 672 of the conduit disposed within the earpiece housing that is acoustically coupled to the receiver.

The device 600 can include any suitable ear-worn device, e.g., ear-wearable electronic device 10 of FIG. 1. In one or more of the embodiments, the device 600 can be one or more of the embodiments of ear-wearable electronic devices described in U.S. Provisional Application No. 63/534,922, filed August 28, 2023, and entitled EAR-WEARABLE

### DEVICE WITH MICROPHONE INLET DIVIDER.

The housing 612 of the ear-wearable electronic device 600 is configured to rest against the wearer's outer ear in a behind-the-ear orientation. The housing 612 can be manufactured using any suitable technique, e.g., injection-molding, 3D printing, etc. Further, the housing 612 may be formed using any suitable material, e.g., at least one of silicone, urethane, acrylate, flexible epoxy, or acrylated urethane. The embodiment of housing 612 illustrated in FIGS. 12-14 includes a top shell 674 and a bottom shell 676 that forms the housing. In one or more embodiments, the top shell 674 is removably attached to the bottom shell 676 by utilizing any suitable technique, e.g., adhering, snap fitting, press fitting, mechanically fastening, or the like.

For purposes of this disclosure, the terms "top," "bottom," "above," "below," "front," "back," etc., when referencing the shells 674, 676 and other parts of the device 600, are not intended to indicate a required orientation of use relative to the ground or other reference point. Generally, these terms are intended to help distinguish locations relative to an arbitrary reference point and may correspond to the orientation in the drawings, but no limitation is intended by the use of these terms.

The top and bottom shells 674, 676 form an enclosure 678 that, once assembled, holds electronic components such as the microphone 618. A groove 680 (FIG. 12) is defined by an interface between the assembled top and bottom shells 674, 676. In this example, the groove 680 extends around a periphery 682 of the top shell 674 and bottom shell 676. The groove 680 provides locations in which ports, inlets, and the like can be placed for allowing air to enter within the housing 612.

The housing 612 includes at least one microphone port 614 that forms part of the microphone conduit 620 from the outside of the housing to inside of the housing. In one or more embodiments, the groove 680 need not extend along the periphery 682 of the shells 674, 676, e.g., may be a slot, port, gap, or other feature that allows air to flow between the shells proximate the microphone port 614. The microphone port 614 along with the microphone conduit 620 provide an air passageway from the external environment to within the housing 612.

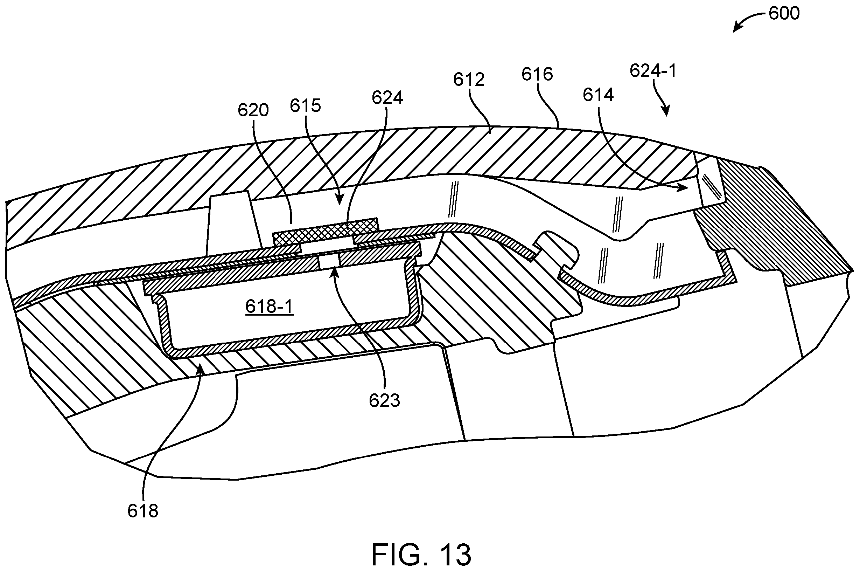

Additional microphone inlets can be disposed in the housing 612 for additional microphones, as indicated by microphone ports 684 (FIG. 12), which are sometimes referred to as rear microphone ports that acoustically couple outside air to a rear microphone (not shown). In such an arrangement, at least one of the microphone ports 684 may be referred to as a front microphone port and acoustically couples outside air to a front microphone (e.g., microphone 618 in FIG. 13). Further, the groove 680 that is coupled to multiple microphone ports 684 may be implemented as two or more separate slots, ports, or the like that are individually located over the microphone ports 614, 684 instead of being a continuous, peripheral, groove as shown.

The microphone conduit 620 is disposed within the housing 612 and extends between the microphone port 614 disposed at the outer surface 616 of the housing and the conduit outlet 615 disposed within the housing. The conduit 620 can take any suitable shape and have any dimensions. Further, the microphone port 614 of the conduit 620 can take any suitable shape and have any suitable dimensions. Air can flow between the outside of the housing 612 and into/out of the microphone conduit 620 via the microphone port 614.

The microphone conduit 620 is designed to acoustically couple sound from outside the ear-wearable device 600 to the microphone 618 disposed at least partially within the device through the conduit outlet 615 that is acoustically coupled to the microphone. The microphone 618 can be disposed at least partially within the housing 612 in any suitable location such that it is acoustically coupled to the conduit outlet 615 of the microphone conduit 620. The microphone 618 can include any suitable microphone or array of microphones. In one or more embodiments, the microphone 618 is configured to provide one or more signals that are configured to reproduce sound into the ear canal of the wearer.

Disposed in the conduit 620 is the filter 624. The filter 624 can include any suitable filter or filter assembly, e.g., filter 24 or filter assembly 50 of FIGS. 1-5. Further, the filter 624 can be configured to at least partially block ingress of liquids and oils into the microphone inlet 623.

The filter 624 can take any suitable shape and have any suitable dimensions. Further, the filter 624 can be disposed in any suitable relationship relative to the microphone conduit 620. As shown in FIG. 13, the filter 624 is disposed adjacent the microphone inlet 623. In one or more embodiments, the filter 624 can be disposed at least partially within the microphone port 614 or entirely within the microphone port. In one or more embodiments, the filter 624 can be disposed over the microphone port 614 and at least partially within the microphone conduit 620. The filter 624 can at least partially occlude the microphone port 614. Further, the filter 624 can at least partially occlude the microphone conduit 620. In one or more embodiments, the filter 624 completely occludes the microphone port 614 such that any sound waves that would be incident upon the inlet are incident upon the filter. Further, in one or more embodiments, the filter 624 can completely occlude the conduit 620. The filter 624, when disposed at least partially within the conduit 620, can be disposed in any suitable portion of the conduit.

In one or more embodiments, the ear-wearable device 600 can include one or more wearer input devices 686. In the example of FIG. 12, the wearer input devices 686 are disposed on the top shell 674 of the housing 612, but other placements of the wearer input devices are possible. The wearer input devices 686 may include buttons, switches, or the like, such as a first button and a second button. The wearer can interact with the wearer input devices 686 (e.g., by pressing one or more buttons) to, e.g., adjust the volume, change one or more settings, or turn the ear-wearable device on or off.

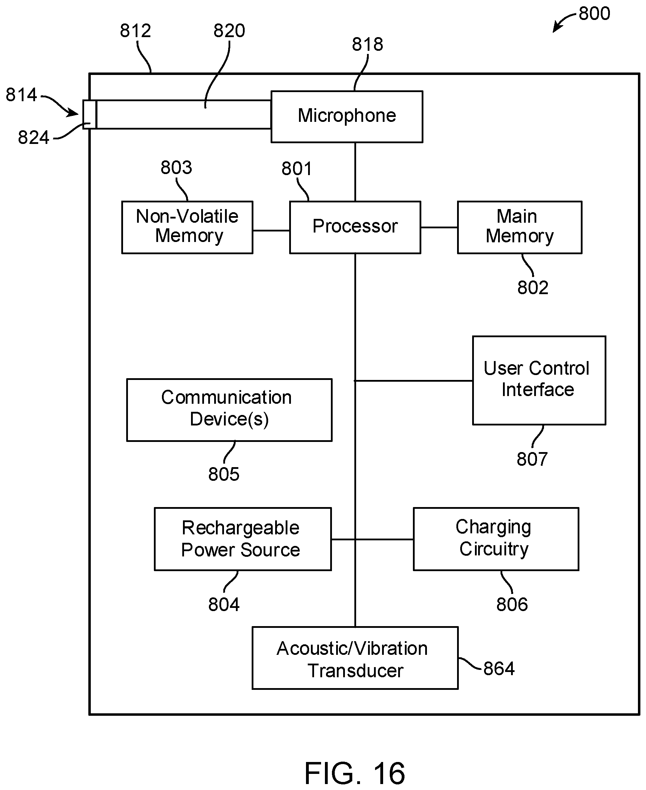

As mentioned herein, the device 600 can include the earpiece 658 (FIGS. 12 and 14) that is coupled to the housing 612 by the cable 660. The earpiece 658 can include the earpiece housing 662 and the transducer (i.e., receiver) 664 disposed at least partially within the housing. The receiver 664 is configured to transmit or propagate acoustic waves into the ear of the wearer through an acoustic conduit 666 that extends between an outlet 668 at an outer surface 670 of the earpiece housing 662 and an inlet 672 disposed within the earpiece housing that is acoustically coupled to the receiver. The receiver 664 can include any suitable receiver or receivers. In one or more embodiments, signals from the microphone 618 can be received by a processor (e.g., processor 801 of ear-wearable electronic device 800 of FIG. 16). The processor can use any suitable technique to produce one or more receiver signals that are based upon the microphone signals and direct such receiver signals to the receiver 664 via the cable 660, where the receiver is configured to receive the receiver signals and reproduce sound into the ear canal of the wearer based upon the receiver signals using any suitable technique.

In one or more embodiments, the filter 624 can be considered a first filter 624-1, and the device 600 can include a second filter 624-2 (collectively referred to herein as filter or filters 624) that is disposed over the outlet 668 of the acoustic conduit 666 of the earpiece 658 or at least partially within the acoustic conduit. The second filter 624-2 can include any suitable filter, e.g., filter 24 of FIGS. 1-3. In one or more embodiments, the device 600 includes the second filter 624-2 disposed over the outlet 668 or at least partially within the acoustic conduit 666 and no filter 624-1 disposed in the conduit 620.

The device 600 can also include a third filter 624-3 disposed over a microphone port 688 of a microphone conduit 690 of a second microphone 618-2 that is disposed at least partially within the earpiece housing 662. In such embodiments, the microphone 618 can be referred to as a first microphone 618-1 (collectively referred to herein as microphone or microphones 618). The second microphone 618-2 can include any suitable microphone, e.g., first microphone 618-1, and can be acoustically coupled to an outlet 692 of the microphone conduit 690. Further, the third filter 624-3 can be disposed at least partially within the microphone conduit 690. The third filter 624-3 can include any suitable filter, e.g., filter 24 of FIGS. 1-3.

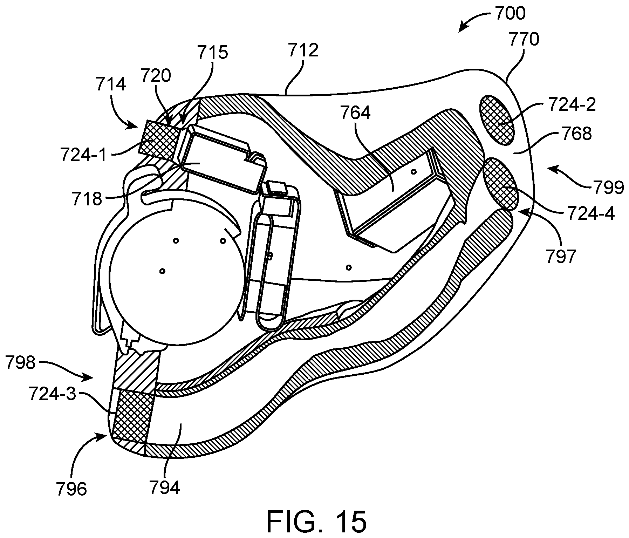

FIG. 15 is a schematic cross-section view of another embodiment of an ear-wearable electronic device 700. All design considerations and possibilities described herein regarding the ear-wearable electronic device 10 of FIG. 1 and the ear-wearable device 600 of FIGS. 12-14 apply equally to the ear-wearable device 700 of FIG. 15 to the extent that they do not conflict. The device 700 is configured to be disposed at least partially within an ear canal of a wearer. For example, the device 700 can be a completely-in-canal (CIC) ear-wearable device.

The device 700 includes a housing 712 and a microphone conduit 720 disposed in the housing and extending between a microphone port 714 disposed at an outer surface 770 of the housing and an outlet 715 disposed within the housing. The device 700 further includes a microphone 718 disposed at least partially within the housing 712 and acoustically coupled to the outlet 715 of the microphone conduit 720. Additionally, the device 700 includes a filter 724-1 disposed at least partially within the microphone conduit 720. Although the filter 724-1 is disposed at least partially within the microphone conduit 720, in one or more embodiments, the filter can be disposed over the microphone port 714 of the microphone conduit. In one or more embodiments, the filter 724-1 can be disposed over the microphone port 714 of the microphone conduit 720 and at least partially within the conduit 720.

The device 700 also includes a receiver 764 disposed at least partially within the housing 712. The receiver 764 is configured to direct acoustic waves to the ear canal through an acoustic conduit (not shown) that extends between an outlet 768 disposed at the outer surface 770 of the housing 712 and an inlet (not shown) disposed within the housing that is acoustically coupled to the receiver. As is also shown in FIG. 15, the device 700 includes a second filter 724-2 disposed over the outlet 768 of the acoustic port or at least partially within the acoustic conduit. In such embodiment, the filter 724-1 can be referred to as a first filter 724-1. The first and second filters 724-1, 724-2 can each include any suitable filter or filter assembly, e.g., filter 24 or filter assembly 50 of FIGS. 1-5.

The device 700 can also include a vent 794 that extends through the housing 712 between an inlet 796 at the outer surface 770 of the housing 712 at a first end 798 of the housing, and an outlet 797 disposed at the outer surface of the housing at a second end 799 of the housing. A vent filter 724-3 can be disposed over the inlet 796 of the vent 794 or at least partially within the vent. Further, in one or more embodiments, the device 700 can also include a second vent filter 724-4 disposed over the outlet 797 of the vent 794 or at least partially within the vent. The first and second vent filters 724-4 can each include any suitable filter or filter assembly, e.g., filter 24 or filter assembly 50 of FIGS. 1-3.

The various embodiments of ear-wearable devices described herein can include any suitable electronic components or circuitry. For example, FIG. 16 is a block diagram that illustrates one embodiment of a system and ear-wearable electronic device 800 in accordance with any of the embodiments disclosed herein. The device 800 includes a housing 812 configured to be wom in, on, or about an ear of a wearer. The device 800 shown in FIG. 16 can represent a single device configured for monaural or single-ear operation or one of a pair of devices configured for binaural or dual-ear operation. Various components are situated or supported within or on the housing 812. The housing 812 can be configured for deployment on a wearer's ear (e.g., a behind-the-ear device housing), within an ear canal of the wearer's ear (e.g., an in-the-ear, in-the-canal, invisible-in-canal, or completely-in-the-canal device housing) or both on and in a wearer's ear (e.g., a receiver-in-canal or receiver-in-the-ear device housing).

The device 800 includes a processor 801 operatively coupled to a main memory 802 and a non-volatile memory 803. The processor 801 can be implemented as one or more of a multi-core processor, a digital signal processor (DSP), a microprocessor, a programmable controller, a general-purpose computer, a special-purpose computer, a hardware controller, a software controller, a combined hardware and software device, such as a programmable logic controller, and a programmable logic device (e.g., FPGA, ASIC). The processor 801 can include or be operatively coupled to main memory 802, such as RAM (e.g., DRAM, SRAM). The processor 801 can include or be operatively coupled to non-volatile (persistent) memory 803, such as ROM, EPROM, EEPROM or flash memory.

The device 800 includes an audio processing facility operably coupled to, or incorporating, the processor 801. The audio processing facility includes audio signal processing circuitry (e.g., analog front-end, analog-to-digital converter, digital-to-analog converter, DSP, and various analog and digital filters), and one or more transducers (e.g., transducer 18 of FIG. 1), such as a microphone arrangement 818, and an acoustic/vibration transducer 864 (e.g., loudspeaker, receiver, bone conduction transducer, motor actuator). The acoustic transducer 864 produces amplified sound inside of the ear canal. The microphone arrangement 818 can include one or more discrete microphones or a microphone array(s) (e.g., configured for microphone array beamforming). Each of the microphones of the microphone arrangement 818 can be situated at different locations of the housing 812. It is understood that the term microphone used herein can refer to a single microphone or multiple microphones unless specified otherwise. The microphone 818 is operatively coupled to the processor 801 and is configured to direct a microphone signal to the processor, which in turn directs a receiver signal to the transducer 864 that is based at least in part on the microphone signal.

At least one of the microphones 818 may be configured as a reference microphone producing a reference signal in response to external sound outside an ear canal of a user. Generally, at least one the reference microphones 818 (also referred to as an externally facing microphones) is acoustically coupled to ambient air outside the housing 812 via an acoustic pathway or microphone conduit 820 and a microphone port 814. The microphone port 814 allows air to pass from external the housing 812 to the microphone 818 disposed at least partially within the housing.

The device 800 may also include a user control interface 807 operatively coupled to the processor 801. The user control interface 807 is configured to receive an input from the wearer of the device 800. The input from the wearer can be any type of user input, such as a touch input, a gesture input, or a voice input. The user control interface 807 may be configured to receive an input from the wearer of the device 800.

The device 800 can include one or more communication devices 805. For example, the one or more communication devices 805 can include one or more radios coupled to one or more antenna arrangements that conform to an IEEE 802.13 (e.g., Wi-Fi^{®}) or Bluetooth^{®} (e.g., BLE, Bluetooth^{®} 4.2, 5.0, 5.1, 5.2 or later) specification, for example. In addition, or alternatively, the device 800 can include a near-field magnetic induction (NFMI) sensor (e.g., an NFMI transceiver coupled to a magnetic antenna) for effecting short-range communications (e.g., ear-to-ear communications, ear-to-kiosk communications). The communications device 805 may also include wired communications, e.g., universal serial bus (USB) and the like.

The device 800 also includes a power source, which can be a conventional battery, a rechargeable battery (e.g., a lithium-ion battery), or a power source including a supercapacitor. In the embodiment shown in FIG. 16, the device 800 includes a rechargeable power source 804 that is operably coupled to power management circuitry for supplying power to various components of the device 800. The rechargeable power source 804 is coupled to charging circuity 806. The charging circuitry 806 is, for example, electrically coupled to charging contacts on the housing 812 that are configured to electrically couple to corresponding charging contacts of a charging unit when the device 800 is placed in the charging unit.

The device 800 can also include one or more filters, e.g., one or more filters 24 of FIGS. 1-3. For example, a filter 824 is disposed over the microphone port 814 or at least partially within the microphone conduit 820 adjacent the microphone port. Although not shown, a second filter can be disposed over an acoustic port of an acoustic conduit that is acoustically coupled to the acoustic/vibration transducer 864 or at least partially within the conduit adjacent the acoustic port.

Embodiments of the disclosure are defined in the claims; however, herein there is provided a non-exhaustive listing of non-limiting examples. Any one or more of the features of these examples may be combined with any one or more features of another example, embodiment, or aspect described herein.

Example Ex1. A superamphiphobic filter including a microparticle layer formed from microparticles. The microparticle layer includes a first major surface, a second major surface, and microstructures disposed in the layer that extend from the first major surface. The filter further includes at least one acoustic passageway disposed through the layer between the first and second major surfaces, and nanoparticles disposed on the first major surface of the layer and one or more of the microstructures.

Example Ex2. The filter of Ex1, where the filter is acoustically transparent.

Example Ex3. The filter of any one of Ex1-Ex2, where the microparticles of the microparticle layer include a mean diameter of at least 5 microns and no greater than 50 microns.

Example Ex4. The filter of any one of Ex1-Ex3, where the nanoparticles include silicon dioxide.

Example Ex5. The filter of any one of Ex1-Ex4, where the nanoparticles have a mean particle size of at least 1 nm and no greater than 10 microns.

Example Ex6. The filter of any one of Ex1-Ex5, where the microparticles include at least one of PTFE, polyacrylate, PVC, or cellulose.

Example Ex7. The filter of any one of Ex1-Ex6, where the microstructures include at least one of spheres, pyramids, cylinders, prisms, or cones.

Example Ex8. The filter of Ex7, where at least one microstructure of the microstructures includes a truncated surface.

Example Ex9. The filter of Ex8, where the truncated surface of the at least one microstructure forms an angle with a plane of the first major surface of the microparticle layer of greater than 0 degrees and no greater than 60 degrees.

Example Ex10. The filter of any one of Ex1-Ex9, where the nanoparticles are attached to the microparticle layer.

Example Ex11. The filter of any one of Ex1-Ex10, where each microstructure of the microstructures includes an aspect ratio of at least 2:3 and no greater than 15:1.

Example Ex12. The filter of any one of Ex1-Ex11, where the at least one acoustic passageway includes an area in a plane of the first major surface of the microparticle layer of at least 0.015 square millimeters and no greater than 0.06 square millimeters.

Example Ex13. The filter of any one of Ex1-Ex12, where the filter exhibits a contact angle of at least 150 degrees for both liquids and oils.

Example Ex14. A filter assembly including a support having a first major surface, a second major surface, and support microstructures extending from the first major surface to define a structured surface, and a superamphiphobic filter disposed on the structured surface of the support. The filter includes a microparticle layer formed from microparticles. The microparticle layer includes a first major surface, a second major surface, and microstructures disposed in the layer that extend from the first major surface, where the microstructures are formed by the support microstructures of the structured surface of the support. The filter further includes at least one acoustic passageway disposed through the layer between the first and second major surfaces, and nanoparticles disposed on the first major surface of the layer and one or more of the microstructures.

Example Ex15. The assembly of Ex14, where the filter is acoustically transparent.

Example Ex16. The assembly of any one of Ex14-Ex15, where the microparticles of the microparticle layer include a mean diameter of at least 5 microns and no greater than 50 microns.

Example Ex17. The assembly of any one of Ex14-Ex16, where the nanoparticles include silicon dioxide.

Example Ex18. The assembly of any one of Ex14-Ex17, where the nanoparticles have a mean particle size of at least 1 nm and no greater than 10 microns.

Example Ex19. The assembly of any one of Ex14-Ex18, where the microparticles include at least one of PTFE, polyacrylate, PVC, or cellulose.

Example Ex20. The assembly of any one of Ex14-Ex19, where the microstructures include at least one of spheres, pyramids, cylinders, prisms, or cones.

Example Ex21. The assembly of Ex20, where at least one microstructure of the microstructures includes a truncated surface.

Example Ex22. The assembly of Ex21, where the truncated surface of the at least one microstructure forms an angle with a plane of the first major surface of the microparticle layer of greater than 0 degrees and no greater than 60 degrees.

Example Ex23. The assembly of any one of Ex14-Ex22, where the nanoparticles are attached to the microparticle layer.

Example Ex24. The assembly of any one of Ex14-Ex23, where each microstructure of the microstructures includes an aspect ratio of at least 2:3 and no greater than 15:1.

Example Ex25. The assembly of any one of Ex14-Ex24, where the at least one acoustic passageway includes an area in a plane of the first major surface of the microparticle layer of at least 0.015 square millimeters and no greater than 0.06 square millimeters.

Example Ex26. The assembly of any one of Ex14-Ex25, where the filter exhibits a contact angle of at least 150 degrees for both liquids and oils.

Example Ex27. An ear-wearable electronic device including a housing, an acoustic port disposed in an outer surface of the housing, and a transducer disposed at least partially within the housing. The device further includes a conduit acoustically connecting the acoustic port and the transducer, where the conduit includes an inner surface, and a superamphiphobic filter disposed over the acoustic port or at least partially within the conduit adjacent the acoustic port. The superamphiphobic filter includes a microparticle layer formed from microparticles. The microparticle layer includes a first major surface, a second major surface, and microstructures disposed in the layer that extend from the first major surface. The filter further includes at least one acoustic passageway disposed through the layer between the first and second major surfaces, and nanoparticles disposed on the first major surface of the layer and one or more of the microstructures.

Example Ex28. The device of Ex27, where the device includes an earpiece.

Example Ex29. The device of any one of Ex27-Ex28, where the transducer includes a receiver.

Example Ex30. The device of any one of Ex27-Ex28, where the transducer includes a microphone.

Example Ex31. The device of any one of Ex27-Ex30, where the filter is acoustically transparent.

Example Ex32. The device of any one of Ex27-Ex31, where the microparticles of the microparticle layer include a mean diameter of at least 5 microns and no greater than 50 microns.

Example Ex33. The device of any one of Ex27-Ex32, where the nanoparticles include silicon dioxide.

Example Ex34. The device of any one of Ex27-Ex33, where the nanoparticles have a mean particle size of at least 1 nm and no greater than 10 microns.

Example Ex35. The device of any one of Ex27-Ex34, where the microparticles include at least one of PTFE, polyacrylate, PVC, or cellulose.

Example Ex36. The device of any one of Ex27-Ex35, where the microstructures include at least one of spheres, pyramids, cylinders, prisms, or cones.

Example Ex37. The device of Ex36, where at least one microstructure of the microstructures includes a truncated surface.

Example Ex38. The device of Ex37, where the truncated surface of the at least one microstructure forms an angle with a plane of the first major surface of the microparticle layer of greater than 0 degrees and no greater than 60 degrees.

Example Ex39. The device of any one of Ex27-Ex38, where the nanoparticles are attached to the microparticle layer.

Example Ex40. The device of any one of Ex27-Ex39, where each microstructure of the microstructures includes an aspect ratio of at least 2:3 and no greater than 15:1.

Example Ex41. The device of any one of Ex27-Ex40, wherein the at least one acoustic passageway includes an area in a plane of the first major surface of the microparticle layer of at least 0.015 square millimeters and no greater than 0.06 square millimeters.

Example Ex42. The device of any one of Ex27-Ex41, where the filter exhibits a contact angle of at least 150 degrees for both liquids and oils.

Example Ex43. A method of forming a superamphiphobic filter including disposing microparticles on a structured surface of a support to form a structured microparticle layer having a first major surface, a second major surface, and microstructures extending from the first major surface of the layer; disposing nanoparticles on at least a portion of the microparticles; and curing at least one of the microparticles and nanoparticles such that at least a portion of the nanoparticles are bonded to the microparticles. The method further includes disposing at least one acoustic passageway through the microparticle layer between the first major surface and the second major surface.

Example Ex44. The method of Ex43, where disposing microparticles includes electrospinning the microparticles onto the structured surface of the support.

Example Ex45. The method of any one of Ex43-Ex44, where disposing the nanoparticles includes electrospraying the nanoparticles onto the at least a portion of the microparticles.

Example Ex46. The method of any one of Ex43-Ex45, where the support includes a metal.

Example Ex47. The method of any one of Ex43-Ex46, where disposing the at least one acoustic passageway includes removing a portion of the microparticle layer in a region of the layer that is aligned with an opening in the support.

Example Ex48. The method of Ex47, where removing the portion of the microparticle layer includes laser ablating the portion of the microparticle layer.

Example Ex48. The filter of any one of Ex1-Ex6 and Ex10-13, wherein the microstructures include a grid extending from the first major surface of the microparticle layer and comprising a plurality of wall sections.

Example Ex49. The filter of Ex48, wherein the grid defines a plurality of cells.

Example Ex50. The filter of Ex49, wherein at least one cell of the plurality of cells comprises a rectangular shape.

Example Ex51. The filter of any one of Ex49-Ex50, wherein at least one acoustic passageway is disposed within a cell of the plurality of cells.

Example Ex52. The filter of Ex51, wherein each acoustic passageway is disposed within a cell of the plurality of cells.

Example Ex53. The filter assembly of any one of Ex14-Ex19 and Ex23-26, wherein the support microstructures include a grid extending from the first major surface of the support and comprising a plurality of wall sections.

Example Ex54. The assembly of Ex53, wherein the grid defines a plurality of cells.

Example Ex55. The assembly of Ex54, wherein at least one cell of the plurality of cells comprises a rectangular shape.

Example Ex56. The assembly of any one of Ex51-Ex55, wherein the support defines one or more openings that are disposed through the support between the first major surface and the second major surface of the support, wherein at least one opening is disposed within a cell of the plurality of cells.

Example Ex57. The assembly of Ex56, wherein each opening is disposed within a cell of the plurality of cells.

Example Ex58. The assembly of any one of Ex14-Ex19, Ex23-Ex26, or Ex53-Ex57, wherein the microstructures include a grid extending from the first major surface of the microparticle layer and comprising a plurality of wall sections.

Example Ex59. The assembly of Ex58, wherein the grid of the microstructures defines a plurality of cells.

Example Ex60. The assembly of Ex59, wherein at least one cell of the plurality of cells of the microstructures of the grid comprises a rectangular shape.

Example Ex61. The assembly of any one of Ex59-Ex60, wherein at least one acoustic passageway of the filter is disposed within a cell of the plurality of cells of the microstructures of the grid.

Example Ex62. The filter of Ex61, wherein each acoustic passageway is disposed within a cell of the plurality of cells of the microstructures of the grid.

All references and publications cited herein are expressly incorporated herein by reference in their entirety into this disclosure, except to the extent they may directly contradict this disclosure. Illustrative embodiments of this disclosure are discussed and reference has been made to possible variations within the scope of this disclosure. These and other variations and modifications in the disclosure will be apparent to those skilled in the art without departing from the scope of the disclosure, and it should be understood that this disclosure is not limited to the illustrative embodiments set forth herein. Accordingly, the disclosure is to be limited only by the claims provided below.

## Claims

1. A superamphiphobic filter comprising:
a microparticle layer formed from microparticles, the microparticle layer comprising a first major surface, a second major surface, and microstructures disposed in the layer that extend from the first major surface;
at least one acoustic passageway disposed through the layer between the first and second major surfaces; and
nanoparticles disposed on the first major surface of the layer and one or more of the microstructures.

2. The filter of claim 1, wherein the microparticles of the microparticle layer comprise a mean diameter of at least 5 microns and no greater than 50 microns.

3. The filter of any one of claims 1-2, wherein the nanoparticles have a mean particle size of at least 1 nm and no greater than 10 microns.

4. The filter of any one of claims 1-3, wherein the nanoparticles are attached to the microparticle layer.

5. The filter of any one of claims 1-4, wherein each microstructure of the microstructures comprises an aspect ratio of at least 2:3 and no greater than 15:1.

6. The filter of any one of claims 1-5, wherein the at least one acoustic passageway comprises an area in a plane of the first major surface of the microparticle layer of at least 0.015 square millimeters and no greater than 0.06 square millimeters.

7. The filter of any one of claims 1-6, wherein the filter exhibits a contact angle of at least 150 degrees for both liquids and oils.

8. A filter assembly comprising:
a support comprising a first major surface, a second major surface, and support microstructures extending from the first major surface to define a structured surface;
a superamphiphobic filter disposed on the structured surface of the support, the filter comprising:
a microparticle layer formed from microparticles, the microparticle layer comprising a first major surface, a second major surface, and microstructures disposed in the layer that extend from the first major surface, wherein the microstructures are formed by the support microstructures of the structured surface of the support;
at least one acoustic passageway disposed through the layer between the first and second major surfaces; and
nanoparticles disposed on the first major surface of the layer and one or more of the microstructures.

9. The assembly of claim 8, wherein the microparticles of the microparticle layer comprise a mean diameter of at least 5 microns and no greater than 50 microns.

10. The assembly of any one of claims 8-9, wherein the nanoparticles have a mean particle size of at least 1 nm and no greater than 10 microns.

11. The assembly of any one of claims 8-10, wherein each microstructure of the microstructures comprises an aspect ratio of at least 2:3 and no greater than 15:1.

12. The assembly of any one of claims 8-11, wherein the filter exhibits a contact angle of at least 150 degrees for both liquids and oils.

13. An ear-wearable electronic device comprising:
a housing;
an acoustic port disposed in an outer surface of the housing;
a transducer disposed at least partially within the housing;
a conduit acoustically connecting the acoustic port and the transducer, the conduit comprising an inner surface; and
a superamphiphobic filter disposed over the acoustic port or at least partially within the conduit adjacent the acoustic port, the superamphiphobic filter comprising:
a microparticle layer formed from microparticles, the microparticle layer comprising a first major surface, a second major surface, and microstructures disposed in the layer that extend from the first major surface;
at least one acoustic passageway disposed through the layer between the first and second major surfaces; and
nanoparticles disposed on the first major surface of the layer and one or more of the microstructures.

14. The device of claim 13, wherein the device comprises an earpiece.

15. A method of forming a superamphiphobic filter comprising:
disposing microparticles on a structured surface of a support to form a structured microparticle layer comprising a first major surface, a second major surface, and microstructures extending from the first major surface of the layer;
disposing nanoparticles on at least a portion of the microparticles;
curing at least one of the microparticles and nanoparticles such that at least a portion of the nanoparticles are bonded to the microparticles;
disposing at least one acoustic passageway through the microparticle layer between the first major surface and the second major surface; and
removing the structured microparticle layer from the support.
